# FASCICULE DE BREVET EUROPEEN

(11) **EP 1 672 454 B1**
(45) Date de publication et mention de la délivrance du brevet: **03.10.2007**
(21) Numéro de dépôt: 05301020.3
(22) Date de dépôt: 07.12.2005
(51) Int. Cl.: G05B 23/02

(54) **Procédé de contrôle des performances énergétiques d'une unité industrielle**
Verfahren zur Prüfung von energetischen Leistungen einer industriellen Einheit
Method for testing the energy performance of an industrial unit

(30) Priorité: 17.12.2004 FR 0453033
(43) Date de publication de la demande: 21.06.2006
(73) Titulaire: L'AIR LIQUIDE, Société Anonyme pour l'Etude et l'Exploitation des Procédés Georges Claude, 75007 Paris (FR)
(72) Inventeur: Drouart, Caroline, 92320 Chatillon (FR); Roba, Thierry, 5310 Boneffe (BE)
(74) Mandataire: Ducreux, Marie

(56) Documents cités:
- US-B1- 6 666 049
- PATENT ABSTRACTS OF JAPAN vol. 1997, no. 03, 31 mars 1997 (1997-03-31) & JP 08 308108 A (HITACHI LTD), 22 novembre 1996 (1996-11-22)

## Description

La présente invention concerne un procédé ainsi qu'un système de contrôle des performances énergétiques d'une unité industrielle ou d'une partie de celle-ci.

Une unité industrielle utilise des équipements consommateurs de puissance électrique, par exemple une unité de séparation de l'air comprenant un ensemble d'équipements du type compresseurs, liquéfacteurs et pompes, ou par exemple encore une partie de celle-ci telle qu'un ensemble de compresseurs.

Le coût de fonctionnement d'une unité de ce type est principalement constitué par l'achat de la puissance électrique nécessaire au fonctionnement des équipements cités ci-dessus.

Ces équipements font l'objet de configurations et de réglages qui ont une influence sur la puissance électrique consommée par l'unité industrielle, pour une contrainte de production donnée.

Diverses solutions existantes visent à minimiser le coût énergétique en relation avec une variation du coût d'achat de la puissance électrique dans le temps en optimisant la production.

En particulier, le document EP 0 581273 décrit un procédé d'optimisation de procédé, dans lequel une modélisation d'une unité industrielle est réalisée, le modèle étant ensuite optimisé et soumis à des contraintes de productions particulières. Le procédé vise à obtenir une optimisation de la production sur une période de temps donnée, en fonction du coût variable de l'énergie consommée au cours de cette période de temps.

Ce procédé utilise une résolution du modèle et une optimisation qui ne permettent pas de réaliser une surveillance du système en vue d'améliorer ses réglages et sa configuration pour une production donnée.

Il est également souhaitable d'optimiser le mode opératoire, c'est-à-dire l'ensemble des réglages de l'unité, pour une contrainte de production donnée.

Pour cela, la consommation de puissance électrique doit faire l'objet d'un suivi, afin de déterminer si les réglages sont satisfaisants ou non d'un point de vue de la consommation de puissance électrique, et de corriger le cas échéant ces réglages, ceci afin d'éviter les dérives de la consommation de puissance électrique et d'optimiser l'utilisation des équipements.

A cet effet, le document US 2003/0097243 décrit un procédé et un système destiné au contrôle d'une unité industrielle de production d'hydrocarbure. Le procédé décrit utilise un mélange de modèles linéaire et non linéaire en vue de réaliser une résolution du modèle et une optimisation de la production et de fournir des propositions de configuration du système.

Ce document ne décrit pas une solution permettant de réaliser un suivi des performances.

Le document US 6 666 049 décrit un procédé de contrôle d'une unité industrielle cryogénique, dans lequel une surveillance d'indicateurs de performance est réalisée, ces indicateurs étant comparés en temps réel avec des valeurs nominales, et des propositions de modifications sont faites si les valeurs des indicateurs s'éloignent des valeurs nominales, en se basant sur un arbre de diagnostic préenregistré fournissant des suggestions qualitatives.

Ce document ne décrit pas précisément le modèle utilisé, ni son mode de construction, ni les réglages à effectuer en temps réel sur les équipements.

Le but de la présente invention est de fournir un procédé de contrôle des performances énergétiques d'une unité industrielle qui permette de prendre en compte les spécificités d'une unité industrielle particulière, sans utiliser de modélisation complexe du comportement de cette unité, et qui permette de signaler les dérives de la consommation de puissance électrique et d'optimiser l'utilisation des équipements.

Un autre but de l'invention est de permettre le contrôle d'une unité industrielle dans son ensemble, ou d'une sous partie de cette unité comprenant un ensemble d'équipements.

La présente invention a pour objet un procédé de contrôle des performances énergétiques d'une unité industrielle ou d'une partie de celle-ci, dans lequel :
on mesure la valeur d'un ensemble de variables relatives à la production de l'unité industrielle et à l'environnement, ainsi que la valeur d'une grandeur représentant la performance énergétique,
on calcule, en utilisant un modèle statistique calibré lors d'une phase d'apprentissage sur une période de référence, à partir des valeurs de l'ensemble des variables relatives à la production de l'unité industrielle et à l'environnement, une estimation de la grandeur représentant la performance énergétique,
on détermine la valeur d'un indicateur de performance énergétique à partir des valeurs mesurée et estimée de la grandeur représentant la performance énergétique,
on compare la valeur de cet indicateur à au moins une valeur de seuil déterminée afin de détecter une dérive des performances énergétiques.

Ces dispositions permettent d'adapter le modèle pour chaque unité de production.

Le modèle statistique calibré par apprentissage prend en compte le point de fonctionnement de l'usine et l'imprécision de l'instrumentation de mesure. Il suffit en effet que les mesures soient reproductibles pour pouvoir utiliser ce modèle.

Le coût de développement est faible, car la méthode est simple, ainsi que la prise en main par des opérateurs non spécialistes.

Lors de changements dus à une maintenance importante, une nouvelle calibration peut également être effectuée simplement, car elle se base sur des mesures automatiques et un apprentissage, et non sur une modélisation physique de l'unité industrielle.

Avantageusement, la grandeur représentative de la performance énergétique est la puissance électrique consommée de l'unité industrielle.

Selon un mode de mise en oeuvre, une alerte à un opérateur est émise en cas de surconsommation énergétique.

Avantageusement, l'indicateur de performance énergétique est défini comme le rapport de la valeur mesurée sur la valeur estimée de la grandeur représentant la performance énergétique.

Selon une possibilité, le modèle statistique est de type linéaire, en particulier obtenu par régression linéaire sur des données de la phase d'apprentissage.

Selon une autre possibilité, le modèle statistique est de type non linéaire, en particulier comportant au moins un réseau de neurones ou des outils de régression locale.

Selon un mode de mise en oeuvre, lors de la phase d'apprentissage, les points de fonctionnement, correspondant à la meilleure performance énergétique observée associée à chaque valeur donnée de l'ensemble des variables d'entrée, sont pris en compte dans le modèle.

Avantageusement, dans le modèle, chaque association entre une valeur donnée de l'ensemble des variables d'entrées et la meilleure performance énergétique, correspondant à un point de fonctionnement, comprend également l'ensemble des données de configuration et de réglage des équipements associés à ce point de fonctionnement et cette meilleure performance énergétique.

Selon un mode de réalisation, lorsqu'une surconsommation est détectée, le modèle fournit un ensemble de données apprises de configuration et de réglage des équipements ayant permis d'obtenir la meilleure performance énergétique pour la valeur courante de l'ensemble des variables d'entrée.

Selon une première possibilité, l'ensemble des variables d'entrée comprend :
- la pression atmosphérique et la température ambiante,
- des débits de production de l'unité,
- des pressions de production de l'usine,
- des données de teneur de la production,
- des débits de vaporisation des liquides et de mise à l'air des gaz,
l'ensemble des données de configuration et de réglage des équipements comprend la configuration des équipements et leur réglage en débit, et la performance énergétique est celle de l'unité industrielle dans son ensemble.

Selon une seconde possibilité, l'ensemble des variables d'entrée comprend :
- le débit et la pression du gaz produit d'un groupe d'équipements de type compresseurs,
- la pression et la température en amont des compresseurs,
l'ensemble des données de configuration et de réglage des équipements comprend la configuration des équipements et leur réglage en débit, et la performance énergétique est celle du groupe de compresseur.

Selon une troisième possibilité, l'ensemble des variables d'entrée comprend:
- le débit liquide de produit sortant d'un liquéfacteur,
- la pression et la température du gaz entrant dans le liquéfacteur,
l'ensemble des données de configuration et de réglage des équipements comprend la pression du cycle, la température du liquide et le débit de recyclage, et la performance énergétique est celle du liquéfacteur.

Avantageusement, l'ensemble des données de configuration et de réglages des équipements de l'unité industrielle comprend au moins une variable d'utilisation d'un équipement indiquant son état de marche ou d'arrêt.

Selon un mode de mise en oeuvre, l'ensemble des données de configuration et de réglages des équipements de l'unité industrielle comprend au moins une valeur de réglage d'un équipement, en particulier un réglage de débit.

Avantageusement, l'ensemble de données apprises de configuration et de réglage des équipements ayant permis d'obtenir la meilleure performance énergétique pour la valeur courante de l'ensemble des variables d'entrée est proposé à l'utilisateur, avec :
- la liste des équipements conseillés, en utilisant les valeurs marche/arrêt des variables d'utilisation enregistrées, et
- l'estimation des réglages pour les équipements, si nécessaire.

Selon un mode de mise en oeuvre, une liste des changements induits pour atteindre une configuration et des réglages donnés des équipements par rapport à la configuration et aux réglages courants est fournie, indiquant les équipements à arrêter ou à démarrer, ainsi que les réglages éventuels à réaliser.

Avantageusement, le procédé est mis en oeuvre en temps réel, les mesures étant effectuées en continu.

Selon un mode de mise en oeuvre, une recalibration est réalisée, afin d'intégrer de nouvelles données d'apprentissage, à une fréquence préétablie, ou sur demande d'un opérateur.

La présente invention a également pour objet un système de contrôle des performances énergétiques d'une unité industrielle, permettant de mettre en oeuvre un procédé selon l'invention, comportant :
- des moyens de mesure dans l'unité industrielle,
- des moyens de stockage permettent d'enregistrer les données correspondantes,
- des moyens de calcul,
- des moyens d'information d'un opérateur,
- des moyens de communication en réseau reliant les composants du système de contrôle.

De toute façon, l'invention sera bien comprise à l'aide de la description qui suit, en référence au dessin schématique annexé, représentant à titre d'exemple non limitatif, deux modes de réalisation d'un système selon l'invention.

La figure 1 est une vue schématique d'une unité industrielle destinée en particulier à la séparation des gaz de l'air.

La figure 2 est une vue schématique du système de contrôle selon l'invention.

La figure 3 est un organigramme schématique d'un procédé selon l'invention selon un premier mode de mise en oeuvre.

La figure 4 est un organigramme schématique de certaines étapes d'une phase de contrôle d'un procédé selon l'invention selon un second mode de mise en oeuvre.

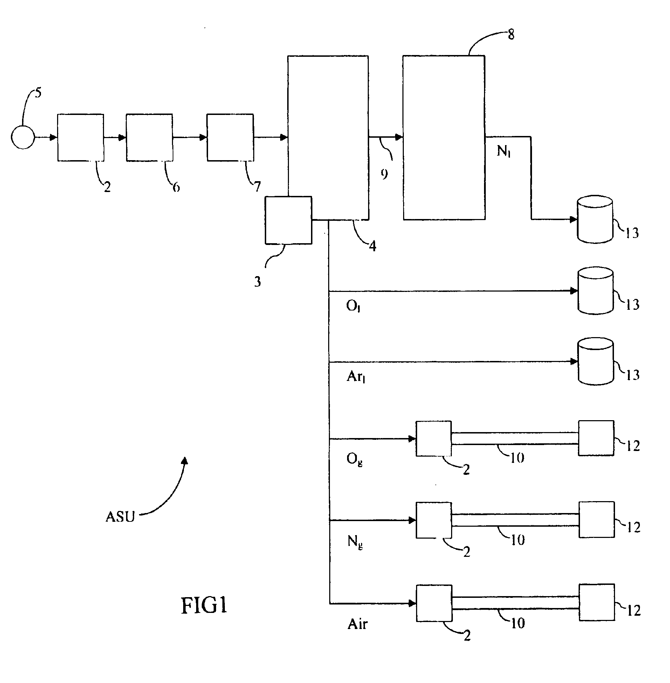

Ainsi que représenté sur la figure 1, de façon schématique, une unité industrielle ASU de séparation des gaz de l'air comporte en particulier des compresseurs 2, ainsi que des pompes 3, ces équipements représentant les principales sources de consommation de puissance électrique de l'unité.

L'unité industrielle ASU comprend également des colonnes de distillations ou oxytonnes 4.

Un seul équipement de chaque catégorie est représenté sur la figure 1, pour plus de clarté.

En fonctionnement, l'unité ASU permet de réaliser les opérations suivantes. De l'air ambiant est aspiré en entrée 5, puis compressé par un compresseur 2, et refroidi par un refroidisseur 6, purifié dans une unité de purification 7 avant d'être introduit dans une colonne de distillation 4.

Une colonne de distillation 4 permet de produire en sortie :
- de l'oxygène sous forme gazeuse O_{g} et liquide Oₗ,
- de l'azote sous forme gazeuse N_{g},
- de l'argon sous forme liquide Arₗ.

De l'air comprimé est également produit par compression de l'air ambiant.

L'unité ASU comprend également un liquéfacteur 8 réalisant la production d'azote liquide Nₗ, à partir d'azote gazeux N_{g} provenant d'une colonne 4, comme représenté schématiquement sur la figure 1 par le lien 9.

Les produits gazeux, après une compression par des compresseurs 2, sont acheminés par des conduites 10 vers des sites clients 12, pour une consommation immédiate. Les produits liquides sont stockés dans des citernes 13, puis livrés ultérieurement aux clients, par des moyens de transports appropriés.

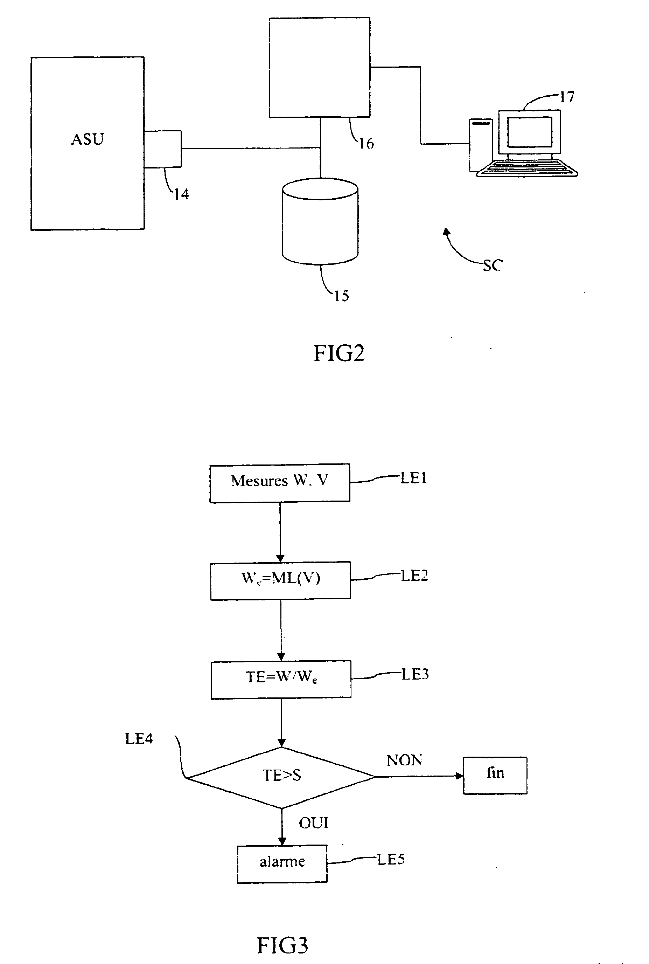

L'unité industrielle ASU est associée à un système de contrôle SC des performances énergétiques selon l'invention, ainsi que représenté sur la figure 2.

Le système SC comporte des moyens de mesures 14 positionnés dans l'unité industrielle ASU effectuant des mesures à une fréquence de l'ordre de la seconde. Les mesures sont toutefois utilisées sous forme de moyennes horaires. Des moyens de stockage 15 permettent d'enregistrer les données correspondantes.

Les mesures incluent en particulier des mesures de la puissance électrique consommée W, ainsi que des paramètres de production, et des paramètres d'environnement.

Le système SC comprend également des moyens de calcul 16 utilisant un modèle comportemental, ou statistique pour calculer une estimation Wₑ de la puissance électrique consommée.

Selon un premier mode de réalisation, le modèle comportemental utilisé est de type linéaire ML, obtenu par régression linéaire sur des données réelles, lors d'une phase préalable d'apprentissage sur une période de référence.

L'ensemble V des variables d'entrée du modèle ML comprend des contraintes de production, et en particulier :
- Le débit QN_{g}^{hp} de la production d'azote gazeux haute pression
- Le débit QO_{g}^{hp} de la production d'oxygène gazeux haute pression
- Le débit QO_{g}^{mp} de la production d'oxygène gazeux moyenne pression
- Le débit QAir de la production d'air comprimé
- Le débit QNₗ entrant dans les moyens de stockage de la production d'azote liquide
- Le débit QOₗ entrant dans les moyens de stockage de la production d'oxygène liquide

Et d'autre part des paramètres d'environnement, en particulier :
- la pression atmosphérique Pₐ
- la température ambiante Tₐ.

Le système comporte en outre des moyens d'information d'un opérateur, sous forme par exemple d'un terminal informatique 17.

Les composants du système de contrôle sont reliés par des moyens de communication en réseau.

Les étapes suivantes sont ainsi réalisées, à intervalle régulier, après la phase initiale d'apprentissage.

Dans une première étape LE1, la valeur de l'ensemble V des variables d'entrées ci-dessus, ainsi que la consommation W, sont fournies par les moyens de mesure 14.

Dans une seconde étape LE2, en prenant en compte la valeur de l'ensemble V des variables d'entrées, fournie par les moyens de mesure 14, le modèle ML calcule une estimation Wₑ de la puissance électrique consommée par l'unité industrielle.

Dans une troisième étape LE3, il est ensuite possible de calculer un indicateur appelé taux énergétique TE, correspondant au quotient W/Wₑ.

Dans une quatrième étape LE4, l'indicateur TE est comparé à au moins un seuil S déterminé. Si l'indicateur TE dépasse ce seuil, une surconsommation est détectée. De même, une sous consommation peut être détectée, par comparaison avec un seuil de sous-consommation.

Dans une cinquième étape LE5, une alarme peut être émise en cas de surconsommation énergétique.

Le modèle ML permet ainsi, par exemple de façon mensuelle, d'obtenir une évaluation du rendement énergétique, c'est-à-dire un diagnostic de sous-consommation ou de surconsommation par rapport aux observations passées, dont le modèle tient compte par son apprentissage.

Le modèle ML ne prend pas en compte les différents réglages et configurations des équipements de l'usine, et il est linéaire.

En conséquence, sa précision est moyenne, mais sa mise en place est simple.

La valeur de l'indicateur de taux énergétique TE est en général proche de un.

Selon un second mode de réalisation, le système de contrôle SC comporte les mêmes éléments que ceux indiqués dans le premier mode de réalisation et sur la figure 2.

Toutefois, dans ce second mode de réalisation, le modèle utilisé par les moyens de calcul 16 est un modèle non linéaire MNL, comportant selon des variantes au moins un réseau de neurones ou des outils de régression locale, le modèle étant calibré sur des données réelles, lors d'une phase préalable d'apprentissage sur une période de référence.

L'ensemble V des variables d'entrée du modèle MNL comprend des contraintes de production, et en particulier :
- Le débit QN_{g}^{hp} et la pression PN_{g}^{hP} de la production d'azote gazeux haute pression,
- Le débit QO_{g}^{hP} et la pression PO_{g}^{hP} de la production d'oxygène gazeux haute pression,
- Le débit QO_{g}^{mp}, la pression PO_{g}^{mp} et le pourcentage de pureté PPO_{g}^{mp} de la production d'oxygène gazeux moyenne pression,
- Le débit QAir et la pression PAir de la production d'air comprimé,
- Le débit QNₗ entrant dans les moyens de stockage de la production d'azote liquide,
- Le débit QOₗ entrant dans les moyens de stockage de la production d'oxygène liquide,
des paramètres d'environnement, en particulier :
- la pression atmosphérique Pₐ
- la température ambiante Tₐ.
et des paramètres caractéristiques du contexte de production, en particulier :
- le débit de vaporisation d'azote QNᵥ
- le débit de vaporisation d'oxygène QOᵥ
- le débit de mise à l'air d'oxygène QO_{Air}

En prenant en compte les variables d'entrées ci-dessus, le modèle calcule une estimation de la puissance électrique consommée par l'unité industrielle.

En outre, des mesures supplémentaires relatives à la configuration des équipements sont réalisées, en particulier :
- les variables d'utilisation UCᵥ des compresseurs à débit variable,
- les variables d'utilisation UC_{F} des compresseurs à débit fixe,
- les variables d'utilisation UP des pompes,
- les variables d'utilisation UO des colonnes,

Chaque variable d'utilisation pour un équipement considéré peut prendre deux valeurs correspondant à la marche ou à l'arrêt de l'équipement considéré.

Des mesures sont également réalisées relatives au réglage des équipements, en particulier :
- les débits QCᵥ des compresseurs à débit variable
- les débits QP des pompes
- les débits QO des colonnes.

L'ensemble CR des données de configuration et de réglage des équipements citées ci-dessus sont stockées dans les moyens de stockage 15.

Lors de la phase d'apprentissage, les étapes suivantes sont réalisées à intervalle de temps déterminés.

Dans une première étape, toutes les données relatives à l'état de l'unité industrielle sont fournies par les moyens de mesure 14 : la valeur de l'ensemble V des variables d'entrées, ainsi que l'ensemble CR des données de configuration et de réglage des équipements et la consommation W, pendant une période de référence, et stockées dans les moyens de stockage.

Dans une seconde étape, parmi les données stockées, l'ensemble des points de fonctionnement, c'est-à-dire des combinaisons données de valeurs de l'ensemble V des variables d'entrée, sont parcourus pour rechercher la meilleure consommation W pour chacun d'entre eux et pour former une association ASSO entre les valeurs de l'ensemble V et cette meilleure consommation W, l'ensemble des associations constituant les paramètres de calibration du modèle MNL.

A chaque association ASSO, est ajouté l'ensemble CR des données de configuration et de réglage des équipements, ayant permis d'obtenir cette consommation optimale.

L'ensemble des associations ASSO ainsi constitué, représentant les paramètres de calibration du modèle, est stocké dans un fichier spécifique FS dans les moyens de stockage.

La configuration des équipements et leurs réglages correspondant à une meilleure consommation énergétique, que nous noteront CR+, peut ainsi être retrouvée lors d'une phase de contrôle en temps réel.

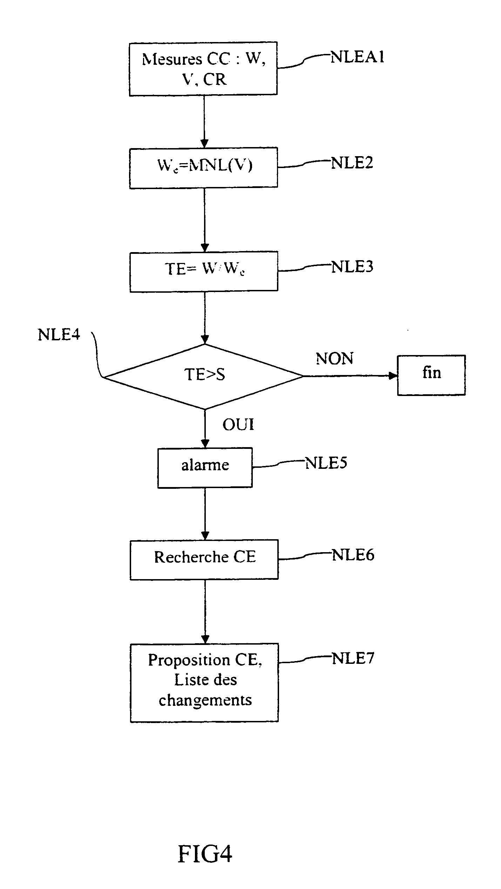

Lors de l'utilisation du système de contrôle dans une phase de contrôle des performances énergétique, les étapes suivantes sont réalisées, ainsi que représenté sur la figure 4.

Dans une première étape NLE1, toutes les données relatives à la l'état de l'unité industrielle sont fournies par les moyens de mesure 14 : la valeur de l'ensemble V des variables d'entrées ci-dessus, ainsi que l'ensemble CR des données de configuration et de réglage des équipements et la consommation W.

Dans une seconde étape NLE2, en prenant en compte la valeur de l'ensemble V des variables d'entrées ci-dessus, fournie par les moyens de mesure 14, le modèle MNL calcule une estimation Wₑ₊ de la puissance électrique consommée par l'unité industrielle, correspondant à une meilleure consommation observée.

Dans une troisième étape NLE3, il est ensuite possible de calculer la valeur de l'indicateur de taux énergétique TE₊, correspondant au quotient W/Wₑ₊.

Dans une quatrième étape NLE4, la valeur de l'indicateur TE₊ est comparé à au moins un seuil S déterminé. Si l'indicateur TE₊ dépasse ce seuil, une surconsommation est détectée. De même, une sous consommation peut être détectée, par comparaison avec un seuil de sous-consommation.

Dans une cinquième étape NLE5, une alarme peut être émise en cas de surconsommation énergétique.

Dans une sixième étape NLE6, le modèle MNL fournit, en rapport avec l'estimation Wₑ₊ de la meilleure consommation obtenue et l'ensemble des valeurs des variables d'entrée V, l'ensemble CR₊ de données des configuration et de réglage des équipements associé.

Dans une septième étape NLE7, cet ensemble CR₊ de données de configuration et réglage des équipements permettant d'améliorer la consommation est proposé à l'utilisateur, avec :
- La liste des équipements conseillés parmi les compresseurs 2, les pompes 3 et les colonnes 4, ce qui revient à indiquer les valeurs marche/arrêt recommandées des variables d'utilisation UCᵥ, UC_{F}, UP, UO, et
- L'estimation des réglages des débits associés QCᵥ, QP, QO pour les équipements, si nécessaires, pour les compresseurs 2 à débit variables, les pompes 3 et les colonnes 4.

Une synthèse des changements induits pour atteindre une configuration et des réglages donnés CR₊, par rapport à la configuration et aux réglages courants CR, peut également être fournie, indiquant les équipements à arrêter ou à démarrer, ainsi que les réglages éventuels de débit à réaliser, ceci en identifiant les différences entre la configuration et les réglages courants CR et la configuration proposée CR₊.

Le procédé est mis en oeuvre en temps réel, les mesures étant effectuées par les moyens de mesure 15 en continu.

La mise en oeuvre de ce procédé et du système de contrôle SC, dans ce mode de réalisation, permet, en temps réel, d'obtenir une évaluation automatique du rendement énergétique, c'est-à-dire un diagnostic de sous-consommation ou de surconsommation par rapport aux observations passées.

Les ensembles CR₊ de données de configurations et réglages enregistrés lors des phases d'apprentissage correspondent à un minimum de consommation d'énergie, avec des variables d'entrée V données.

En variante, il est possible de proposer plusieurs ensembles CR₊ de données de configurations et réglages enregistrées à l'opérateur en cas de surconsommation.

Ainsi il est possible de proposer des changements simples mais induisant un gain énergétique faible et des changements complexes induisant des gains plus élevés.

Le modèle permet également d'obtenir une estimation de gain potentiel de consommation énergétique en réalisant un changement.

A la différence de l'indicateur de taux énergétique TE du premier mode de réalisation, la valeur du taux énergétique TE₊ du second mode de mise en oeuvre est en général supérieur à un, car le modèle représente la meilleure consommation observée par le passé dans les mêmes conditions. Ce taux devient inférieur à un si la consommation est inférieure à celle constatée par le passé. Un réapprentissage peut alors être réalisé pour prendre en compte l'ensemble CR de données de configuration et de réglages courants.

Il est ainsi possible d'utiliser le système SC comme outil d'aide à la décision, en temps réel, pour assister les opérateurs dans le réglage et la configuration, pour obtenir un réglage au moins aussi bon que par le passé.

Dans ce mode de mise en oeuvre, comme dans le précédent, il est nécessaire de réaliser une phase d'apprentissage sur une période de référence initiale, et il est possible de réaliser un nouvel apprentissage après une durée déterminée d'utilisation du système.

Selon une variante, un nouvel apprentissage est réalisé après une durée déterminée d'utilisation du système SC. En particulier, il est possible de réaliser un apprentissage automatique à intervalles de temps réguliers. Par exemple, un réapprentissage tous les mois sur une base d'apprentissage incluant les données enregistrées dans les moyens de stockage 15 au cours des douze mois précédents le réapprentissage, ou encore un réapprentissage chaque mois sur une base d'apprentissage de taille croissante incluant toutes les données depuis la dernière modification technologique majeure de l'usine jusqu'à la date du réapprentissage.

Selon une variante, l'unité industrielle pour laquelle la performance énergétique n'est pas l'unité de séparation de l'air dans son ensemble, mais seulement un groupe de compresseurs de produit oxygène ou azote, ou d'air.

Dans ce cas, l'ensemble V des variables d'entrée comprend :
- le débit et la pression du gaz produit par le groupe d'équipements de type compresseurs 2,
- la pression et la température en amont des compresseurs 2.

L'ensemble CR des données de configuration et réglage comprend la configuration des équipements et leur réglage en débit, et la puissance électrique consommée W est celle du groupe de compresseur 2.

Selon une autre variante, l'unité industrielle pour laquelle la performance énergétique n'est pas l'unité de séparation de l'air dans son ensemble, mais seulement mais un liquéfacteur 8.

Dans ce cas, l'ensemble V des variables d'entrée comprend :
- le débit liquide de produit N_{L} sortant du liquéfacteur 8,
- la pression et la température du gaz entrant dans le liquéfacteur 8.

L'ensemble CR des données de configuration et réglage comprend des données spécifiques du liquéfacteur, à savoir la pression du cycle, la température du liquide et le débit de recyclage, et la puissance électrique consommée W est celle du liquéfacteur 8.

Comme il va se soi, l'invention ne se limite pas aux formes de réalisations préférentielles décrites ci-dessus, à titre d'exemples non limitatif ; elle en embrasse au contraire toutes les variantes dans le cadre des revendications ci-après.

## Revendications

1. Procédé de contrôle des performances énergétiques d'une unité industrielle ou d'une partie de celle-ci, dans lequel :
on mesure la valeur d'un ensemble (V) de variables relatives à la production de l'unité industrielle et à l'environnement, ainsi que la valeur d'une grandeur représentant la performance énergétique (W),
on calcule, en utilisant un modèle statistique (ML, MNL) calibré lors d'une phase d'apprentissage sur une période de référence, à partir des valeurs de l'ensemble (V) des variables relatives à la production de l'unité industrielle (ASU) et à l'environnement, une estimation (Wₑ) de la grandeur représentant la performance énergétique,
on détermine la valeur d'un indicateur (TE, TE₊) de performance énergétique à partir des valeurs mesurée (W) et estimée (Wₑ) de la grandeur représentant la performance énergétique,
on compare la valeur de cet indicateur à au moins une valeur de seuil (S) déterminée afin de détecter une dérive des performances énergétiques.

2. Procédé selon la revendication 1, **caractérisé en ce que** la grandeur représentative de la performance énergétique est la puissance électrique consommée (W) de l'unité industrielle.

3. Procédé selon l'une des revendications 1 et 2, **caractérisé en ce qu**'une alerte à un opérateur est émise en cas de surconsommation énergétique.

4. Procédé selon l'une des revendications 1 à 3, **caractérisé en ce que** l'indicateur (TE, TE₊) de performance énergétique est défini comme le rapport de la valeur mesurée (W) sur la valeur estimée (Wₑ) de la grandeur représentant la performance énergétique.

5. Procédé selon l'une des revendications 1 à 4, **caractérisé en ce que** le modèle statistique est de type linéaire (ML), en particulier obtenu par régression linéaire sur des données de la phase d'apprentissage.

6. Procédé selon l'une des revendications 1 à 4, **caractérisé en ce que** le modèle statistique est de type non linéaire (MLN), en particulier comportant au moins un réseau de neurones ou des outils de régression locale.

7. Procédé selon l'une des revendications 1 à 6, **caractérisé en ce que** lors de la phase d'apprentissage, les meilleurs points de fonctionnement, correspondant à la meilleure performance énergétique (W) observée associée à chaque valeur donnée de l'ensemble (V) des variables d'entrée, sont pris en compte dans le modèle (MNL).

8. Procédé selon la revendication 7, **caractérisé en ce que** dans le modèle (MNL), chaque association (ASSO) entre une valeur donnée de l'ensemble (V) des variables d'entrées et la meilleure performance énergétique (W), correspondant à un point de fonctionnement, comprend également l'ensemble (CR) des données de configuration et de réglage des équipements associés à ce point de fonctionnement.

9. Procédé selon l'une des revendications 7 ou 8, **caractérisé en ce que** lorsqu'une surconsommation est détectée, le modèle (MNL) fournit un ensemble (CR₊) de données apprises de configuration et de réglage des équipements ayant permis d'obtenir la meilleure performance énergétique (Wₑ₊) pour la valeur courante de l'ensemble (V) des variables d'entrée.

10. Procédé selon l'une des revendications 1 à 9, **caractérisé en ce que** l'ensemble (V) des variables d'entrée comprend :
- la pression atmosphérique (Pₐ) et la température ambiante (Tₐ),
- des débits (QN_{g}^{hp}, QO_{g}^{hp}, QO_{g}^{mp}, QAir, QNₗ, QOₗ) de production de l'unité,
- des pressions de production de l'usine (PN_{g}^{hp}, PO_{g}^{hp}, PO_{g}^{mp}, PAir),
- des données de teneur de la production (PPO_{g}^{mp}),
- des débits de vaporisation (QNᵥ, QN_{O}) des liquides et de mise à l'air des gaz,
l'ensemble (CR) des données de configuration et de réglage des équipements comprend la configuration des équipements et leur réglage en débit, et la performance énergétique (W) est celle de l'unité industrielle dans son ensemble.

11. Procédé selon l'une des revendications 1 à 9, **caractérisé en ce que** l'ensemble (V) des variables d'entrée comprend :
- le débit et la pression du gaz produit d'un groupe d'équipements de type compresseurs (2),
- la pression et la température en amont des compresseurs (2),
l'ensemble (CR) des données de configuration et de réglage des équipements comprend la configuration des équipements et leur réglage en débit, et la performance énergétique (W) est celle du groupe de compresseur (2).

12. Procédé selon l'une des revendications 1 à 9, **caractérisé en ce que** l'ensemble (V) des variables d'entrée comprend :
- le débit liquide de produit (N_{L}) sortant d'un liquéfacteur (8),
- la pression et la température du gaz entrant dans le liquéfacteur (8),
l'ensemble (CR) des données de configuration et de réglage des équipements comprend la pression du cycle, la température du liquide et le débit de recyclage, et la performance énergétique (W) est celle du liquéfacteur (8).

13. Procédé selon l'une des revendications 8 à 12, **caractérisé en ce que** l'ensemble (CR) des données de configuration et de réglages des équipements (2, 3, 4) de l'unité industrielle comprend au moins une variable d'utilisation d'un équipement (2, 3, 4) indiquant son état de marche ou d'arrêt, (UC_{F}, UP, UO).

14. Procédé selon l'une des revendications 8 à 13, **caractérisé en ce que** l'ensemble (CR) des données de configuration et de réglages des équipements (2, 3, 4) de l'unité industrielle comprend au moins une valeur de réglage d'un équipement (2, 3, 4), en particulier un réglage de débit (QCᵥ, QP, QO).

15. Procédé selon l'une des revendication 13 ou 14, **caractérisé en ce que** l'ensemble (CR₊) de données apprises de configuration et de réglage des équipements ayant permis d'obtenir la meilleure performance énergétique (Wₑ₊) pour la valeur courante de l'ensemble (V) des variables d'entrée est proposé à l'utilisateur, avec :
- La liste des équipements (2, 3 4) conseillés, en utilisant les valeurs marche/arrêt des variables d'utilisation (UCᵥ, UC_{F}, UP, UO) enregistrées, et
- L'estimation des réglages (QCᵥ, QP, QO) pour les équipements (2, 3 4), si nécessaire.

16. Procédé selon la revendication 15, **caractérisé en ce qu'**une liste des changements induits pour atteindre une configuration et des réglages donnés des équipements (CR₊) par rapport à la configuration et aux réglages courants (CR) est fournie, indiquant les équipements (2, 3, 4) à arrêter ou à démarrer, ainsi que les réglages éventuels à réaliser.

17. Procédé selon l'une des revendications 1 à 16, **caractérisé en ce que** le procédé est mis en oeuvre en temps réel, les mesures étant effectuées en continu.

18. Procédé selon l'une des revendications 1 à 17, **caractérisé en ce qu**'une recalibration est réalisée, afin d'intégrer de nouvelles données d'apprentissage, à une fréquence préétablie, ou sur demande d'un opérateur.

19. Système de contrôle des performances énergétiques d'une unité industrielle, comprenant
- des moyens de mesure (14) dans l'unité industrielle,
- des moyens de stockage (15) permettent d'enregistrer les données correspondantes,
- des moyens de calcul (16),
- des moyens d'information d'un opérateur (17),
- des moyens de communication en réseau reliant les composants du système de contrôle,
**caracterisé en ce qu**'il comprend en plus des moyens pour la mise en oeuvre des étapes d'un procédé selon l'une des revendications 1 à 18.

## Claims

1. Process for controlling the energy performance of an industrial unit or of a part of the latter, in which process:
the value of a set (V) of variables relating to the production of the industrial unit and to the environment are measured, as is the value of a quantity representing the energy performance (W),
an estimate (Wₑ) of the quantity representing the energy performance is calculated, using a statistical model (ML, MNL) calibrated during a phase of learning over a reference period, on the basis of the values of the set (V) of the variables relating to the production of the industrial unit (ASU) and to the environment,
the value of an energy performance indicator (TE, TE₊) is determined on the basis of the measured value (W) and estimated value (Wₑ) of the quantity representing the energy performance,
the value of this indicator is compared with at least one threshold value (S) determined so as to detect a drift in the energy performance.

2. Process according to Claim 1, **characterized in that** the quantity representative of the energy performance is the electrical power consumed (W) of the industrial unit.

3. Process according to either of Claims 1 and 2, **characterized in that** an alert to an operator is emitted in case of energy over-consumption.

4. Process according to one of Claims 1 to 3, **characterized in that** the energy performance indicator (TE, TE₊) is defined as the ratio of the measured value (W) to the estimated value (Wₑ) of the quantity representing the energy performance.

5. Process according to one of Claims 1 to 4, **characterized in that** the statistical model is of linear type (ML), in particular obtained by linear regression on data of the learning phase.

6. Process according to one of Claims 1 to 4, **characterized in that** the statistical model is of nonlinear type (MLN), in particular comprising at least one neural network or tools for local regression.

7. Process according to one of Claims 1 to 6, **characterized in that** during the learning phase, the best operating points, corresponding to the best energy performance (W) observed associated with each given value of the set (V) of input variables, are taken into account in the model (MNL).

8. Process according to Claim 7, **characterized in that** in the model (MNL), each association (ASSO) between a given value of the set (V) of input variables and the best energy performance (W), corresponding to an operating point, also comprises the set (CR) of configuration and setting data for the equipment associated with this operating point.

9. Process according to one of Claims 7 or 8, **characterized in that** when an over-consumption is detected, the model (MNL) provides a set (CR+) of learnt configuration and setting data for the equipment that made it possible to obtain the best energy performance for the current value of the set (V) of input variables.

10. Process according to one of Claims 1 to 9, **characterized** (Wₑ₊) in that the set (V) of input variables comprises:
- the atmospheric pressure (Pₐ) and the ambient temperature (Tₐ),
- production flow rates (QN_{g}^{hp}, QO_{g}^{hp}, QO_{g}^{mp}, QAir, QN_{I}, QO_{I}) for the unit,
- production pressures for the plant (PN_{g}^{hp}, PO_{g}^{hp}, PO_{g}^{mp}, PAir),
- production rating data (PPO_{g}^{mp}),
- flow rates of vaporization (QNᵥ, QNₒ) of the liquids and of venting of gases,
the set (CR) of configuration and setting data for the equipment comprises the configuration of the equipment and their setting in terms of flow rate, and the energy performance (W) is that of the industrial unit as a whole.

11. Process according to one of Claims 1 to 9, **characterized in that** the set (V) of input variables comprises:
- the flow rate and the pressure of the gas produced from a group of equipment of compressor type (2),
- the pressure and the temperature upstream of the compressors (2),
the set (CR) of configuration and setting data for the equipment comprises the configuration of the equipment and their setting in terms of flow rate, and the energy performance (W) is that of the group of compressors (2).

12. Process according to one of Claims 1 to 9, **characterized in that** the set (V) of input variables comprises:
- the liquid flow rate of product (N_{L}) leaving a liquefier (8),
- the pressure and the temperature of the gas entering the liquefier (8), the set (CR) of configuration and setting data for the equipment comprises the pressure of the cycle, the temperature of the liquid and the recycling flow rate, and the energy performance (W) is that of the liquefier (8) .

13. Process according to one of Claims 8 to 12, **characterized in that** the set (CR) of configuration and setting data for the equipment (2, 3, 4) of the industrial unit comprises at least one variable of usage of an item of equipment (2, 3, 4) indicating its on or off state (UC_{F}, UP, UO).

14. Process according to one of Claims 8 to 13, **characterized in that** the set (CR) of configuration and setting data for the equipment (2, 3, 4) of the industrial unit comprises at least one value of setting of an item of equipment (2, 3, 4), in particular a flow rate setting (QCᵥ, QP, QO).

15. Process according to one of Claims 13 or 14, **characterized in that** the set (CR+) of learnt configuration and setting data for the equipment that made it possible to obtain the best energy performance (W_{e⁺}) for the current value of the set (V) of input variables is proposed to the user, with:
- the list of advocated equipment (2, 3, 4), using the on/off values of the usage variables (UCᵥ, UC_{F}, UP, UO) recorded, and
- the estimate of the settings (QCᵥ, QP, QO) for the equipment (2, 3, 4), if necessary.

16. Process according to Claim 15, **characterized in that** a list of the changes induced so as to achieve a given configuration and settings of the equipment (CR₊) with respect to the current configuration and settings (CR) is provided, indicating the equipment (2, 3, 4) to be turned off or to be started up, as well as the possible settings to be effected.

17. Process according to one of Claims 1 to 16, **characterized in that** the process is implemented in real time, the measurements being performed continuously.

18. Process according to one of Claims 1 to 17, **characterized in that** a recalibration is performed, so as to integrate new learning data, at a pre-established frequency, or on the request of an operator.

19. System for controlling the energy performance of an industrial unit, comprising:
- means of measurement (14) in the industrial unit,
- means of storage (15) making it possible to record the corresponding data,
- means of calculation (16),
- means of informing an operator (17),
- means of network communication linking the components of the control system, **characterized in that** it also comprises means for implementing the steps of a process according to one of Claims 1 to 18.

## Patentansprüche

1. Verfahren zum Prüfen der energetischen Leistungen einer industriellen Einheit oder eines Teils dieser, bei welchem:
man den Wert einer Einheit (V) von Variablen in Zusammenhang mit der Produktion der industriellen Einheit und in Zusammenhang mit der Umwelt sowie den Wert einer Größe, die die energetische Leistung (W) darstellt, misst,
man unter Verwenden eines statistischen Modells (ML, MNL), das bei einer Lernphase über eine Referenzzeitspanne kalibriert wird, ausgehend von den Werten der Einheit (V) Variablen in Zusammenhang mit der Produktion der industriellen Einheit (ASU) und der Umwelt berechnet, wobei eine Schätzung (Wₑ) der Größe die energetische Leistung darstellt,
man den Wert eines Indikators (TE, TE₊) energetischer Leistung ausgehend von den gemessenen Werten (W) und geschätzten Werten (Wₑ) der Größe, die die energetische Leistung darstellt, bestimmt,
man den Wert dieses Indikators mit mindestens einem bestimmten Schwellenwert (S) vergleicht, um ein Abweichen der energetischen Leistungen zu erkennen.

2. Verfahren nach Anspruch 1, **dadurch gekennzeichnet, dass** die für die energetische Leistung repräsentative Größe die verbrauchte elektrische Leistung (W) der industriellen Einheit ist.

3. Verfahren nach einem der Ansprüche 1 und 2, **dadurch gekennzeichnet, dass** für einen Bediener bei Energieüberverbrauch eine Warnung ausgegeben wird.

4. Verfahren nach einem der Ansprüche 1 bis 3, **dadurch gekennzeichnet, dass** der Indikator (TE, TE₊) energetischer Leistung als das Verhältnis des gemessenen Werts (W) zu dem geschätzten Wert (Wₑ) der Größe, die die energetische Leistung darstellt, definiert ist.

5. Verfahren nach einem der Ansprüche 1 bis 4, **dadurch gekennzeichnet, dass** das statistische Modell des linearen Typs (ML) ist, das insbesondere durch lineare Regression an Daten der Lernphase erzielt wird.

6. Verfahren nach einem der Ansprüche 1 bis 4, **dadurch gekennzeichnet, dass** das statistische Modell des nicht linearen Typs (MLN) ist, das insbesondere mindestens ein Neuronennetz oder Werkzeuge zur lokalen Regression aufweist.

7. Verfahren nach einem der Ansprüche 1 bis 6, **dadurch gekennzeichnet, dass** bei der Lernphase die besten Betriebspunkte, die der besten energetischen Leistung (W) entsprechen, die in Zusammenhang mit jedem gegebenen Wert der Einheit (V) der Eingangsvariablen beobachtet wird, in dem Modell (MNL) berücksichtigt werden.

8. Verfahren nach Anspruch 7, **dadurch gekennzeichnet, dass** in dem Modell (MNL) jede Assoziation (ASSO) zwischen einem gegebenen Wert der Einheit (V) der Eingangsvariablen und der besten energetischen Leistung (W), die einem Betriebspunkt entspricht, auch die Einheit (CR) der Konfigurations- und Einstelldaten der zu diesem Betriebspunkt gehörenden Ausstattungen aufweist.

9. Verfahren nach einem der Ansprüche 7 oder 8, **dadurch gekennzeichnet, dass** bei Erkennen eines Überverbrauchs das Modell (MML) eine Einheit (CR₊) gelernter Konfigurations- und Einstelldaten der Ausstattungen liefert, die es erlaubt haben, die beste energetische Leistung (Wₑ₊) für den laufenden Wert der Einheit (V) der Eingangsvariablen zu erzielen.

10. Verfahren nach einem der Ansprüche 1 bis 9, **dadurch gekennzeichnet, dass** die Einheit (V) der Eingangsvariablen Folgendes aufweist:
- den Luftdruck (Pₐ) und die Raumtemperatur (Tₐ),
- die Produktionsdurchsätze (QN_{g}^{hp}, QO_{g}^{hp}, QO_{g}^{mp}, QAir, QN₁, QO₁) der Einheit,
- die Produktionsdrücke des Werks (PN_{g}^{hp}, PO_{g}^{hp}, PO_{g}^{mp} , PAir),
- die Produktionsgehaltsdaten (PPO_{g}^{mp}),
- die Verdampfungsdurchsätze (QNᵥ, QNₒ) der Flüssigkeiten und des Ableitens ins Freie der Gase,
wobei die Einheit (CR) der Konfigurations- und Einstelldaten der Ausstattungen die Konfiguration der Ausstattungen und ihre Durchsatzeinstellung aufweist, und die energetische Leistung (W) die der industriellen Einheit insgesamt ist.

11. Verfahren nach einem der Ansprüche 1 bis 9, **dadurch gekennzeichnet, dass** die Einheit (V) der Eingangsvariablen Folgendes aufweist:
- den Durchsatz und den Druck des Gases, das von einem Ausstattungsaggregat des Typs Kompressoren (2) erzeugt wird,
- den Druck und die Temperatur stromaufwärts der Kompressoren (2),
wobei die Einheit (CR) der Konfigurations- und Einstelldaten der Ausstattungen die Konfiguration der Ausstattungen und ihre Durchsatzeinstellung aufweist, und die energetische Leistung (W) die des Kompressorenaggregats (2) ist.

12. Verfahren nach einem der Ansprüche 1 bis 9, **dadurch gekennzeichnet, dass** die Einheit (V) der Eingangsvariablen Folgendes aufweist:
- den flüssigen Produktdurchsatz (N_{L}), der aus einem Verflüssiger (8) hervorgeht,
- den Druck und die Temperatur des Gases, das in den Verflüssiger (8) eintritt,
wobei die Einheit (CR) der Konfigurations- und Einstelldaten der Ausstattungen den Druck des Zyklus, die Temperatur der Flüssigkeit und den Recyclingdurchsatz aufweist und die energetische Leistung (W) die des Verflüssigers (8) ist.

13. Verfahren nach einem der Ansprüche 8 bis 12, **dadurch gekennzeichnet, dass** die Einheit (CR) der Konfigurations- und Einstelldaten der Ausstattungen (2, 3, 4) der industriellen Einheit mindestens eine Gebrauchsvariable einer Ausstattung (2, 3, 4) aufweist, die ihren Betriebs- oder Stillstandszustand (UC_{F}, UP, UO) anzeigt.

14. Verfahren nach einem der Ansprüche 8 bis 13, **dadurch gekennzeichnet, dass** die Einheit (CR) der Konfigurations- und Einstelldaten der Ausstattungen (2, 3, 4) der industriellen Einheit mindestens einen Einstellwert einer Ausstattung (2, 3, 4), insbesondere eine Durchsatzeinstellung (QCᵥ, QP, QO) aufweist.

15. Verfahren nach einem der Ansprüche 13 oder 14, **dadurch gekennzeichnet, dass** die Einheit (CR₊) gelernter Konfigurations- und Einstelldaten der Ausstattungen, die es erlaubt hat, die beste energetische Leistung (Wₑ₊) für den laufenden Wert der Einheit (V) der Eingangsvariablen zu erzielen, dem Benutzer vorgeschlagen wird mit:
- der Liste der empfohlenen Ausstattungen (2, 3, 4) unter Einsatz der Ein-/Auswerte der registrierten Gebrauchsvariablen (UC_{V}, UC_{F}, UP, UO ) und
- der Schätzung der Einstellungen (QC_{V}, QP, QO) für die Ausstattungen (2, 3, 4), falls erforderlich.

16. Verfahren nach Anspruch 15, **dadurch gekennzeichnet, dass** eine Liste der Änderungen, die eingeführt werden, um eine gegebene Konfiguration und Einstellungen der Ausstattungen (CR₊) im Vergleich zu der laufenden Konfiguration und den laufenden Einstellungen (CR) zu erreichen, geliefert wird, die die Ausstattungen (2, 3, 4) anzeigt, die zu stoppen oder zu starten sind, sowie die eventuell durchzuführenden Einstellungen.

17. Verfahren nach einem der Ansprüche 1 bis 16, **dadurch gekennzeichnet, dass** das Verfahren in Echtzeit umgesetzt wird, wobei die Messungen ununterbrochen ausgeführt werden.

18. Verfahren nach einem der Ansprüche 1 bis 17, **dadurch gekennzeichnet, dass** ein Neukalibrieren mit vorausbestimmter Häufigkeit oder auf Anfrage eines Bedieners durchgeführt wird, um neue Lerndaten zu integrieren.

19. System zum Prüfen der energetischen Leistungen einer industriellen Einheit, Folgendes aufweisend:
- Messmittel (14) in der industriellen Einheit,
- Speichermittel (15), die das Aufzeichnen der entsprechenden Daten erlauben,
- Rechenmittel (16),
- Mittel zum Informieren eines Bedieners (17),
- Netzkommunikationsmittel, die die Bauteile des Prüfsystems verbinden,
**dadurch gekennzeichnet, dass** es ferner Mittel zum Umsetzen der Schritte eines Verfahrens nach einem der Ansprüche 1 bis 18 aufweist.
